# EUROPEAN PATENT SPECIFICATION

(11) **EP 1 461 770 B1**
(45) Date of publication and mention of the grant of the patent: **30.11.2005**
(21) Application number: 02785783.8
(22) Date of filing: 03.12.2002
(51) Int. Cl.: G06T 7/20

(54) **IMAGE DATA RETRIEVAL**
BILDDATENZUGRIFF
EXTRACTION DE DONNEES D'IMAGE

(30) Priority: 03.12.2001 US 11896
(43) Date of publication of application: 29.09.2004
(73) Proprietor: Koninklijke Philips Electronics N.V., 5621 BA Eindhoven (NL)
(72) Inventor: RIEMENS, Abraham, K., NL-5656 AA Eindhoven (NL); SCHUTTEN, Robert, J., NL-5656 AA Eindhoven (NL); RATHNAM, Selliah, NL-5656 AA Eindhoven (NL); MACCATO, Andrea, NL-5656 AA Eindhoven (NL); VISSERS, Kornelis, A., NL-5656 AA Eindhoven (NL)
(74) Representative: Duijvestijn, Adrianus Johannes
(86) International application number: PCT/IB2002/005068
(87) International publication number: WO 2003/049034

(56) References cited:
- EP-A- 0 395 293
- YEONG-KANG LAI ET AL: "A flexible data-interlacing architecture for full-search block-matching algorithm" APPLICATION-SPECIFIC SYSTEMS, ARCHITECTURES AND PROCESSORS, 1997. PROCEEDINGS., IEEE INTERNATIONAL CONFERENCE ON ZURICH, SWITZERLAND 14-16 JULY 1997, LOS ALAMITOS, CA, USA,IEEE COMPUT. SOC, US, 14 July 1997 (1997-07-14), pages 96-104, XP010236680 ISBN: 0-8186-7959-X
- SCHIEFER P: "A novel VLSI-architecture for motion-estimation: the picture processing RAM" CIRCUITS AND SYSTEMS, 1992., PROCEEDINGS OF THE 35TH MIDWEST SYMPOSIUM ON WASHINGTON, DC, USA 9-12 AUG. 1992, NEW YORK, NY, USA,IEEE, US, 9 August 1992 (1992-08-09), pages 536-539, XP010057718 ISBN: 0-7803-0510-8
- HAAN DE G ET AL: "TRUE-MOTION ESTIMATION WITH 3-D RECURSIVE SEARCH BLOCK MATCHING" IEEE TRANSACTIONS ON CIRCUITS AND SYSTEMS FOR VIDEO TECHNOLOGY, IEEE INC. NEW YORK, US, vol. 3, no. 5, 1 October 1993 (1993-10-01), pages 368-379, XP000414663 ISSN: 1051-8215 cited in the application
- HAAN DE G: "IC FOR MOTION-COMPENSATED DE-INTERLACING, NOISE REDUCTION, AND PICTURE-RATE CONVERSION" IEEE TRANSACTIONS ON CONSUMER ELECTRONICS, IEEE INC. NEW YORK, US, vol. 45, no. 3, August 1999 (1999-08), pages 617-624, XP000926975 ISSN: 0098-3063 cited in the application

## Description

The present invention relates to data retrieval, in particular for motion compensation and/or estimation in a video image.

In a sequence of images such as video images moving objects will generally appear in different zones of consecutive images.

In encoding of digital video signals it is well known to apply compression schemes such as MPEG-2 encoding to obtain significant reduction of the amount of data to be incorporated in the signal by arranging for complete encoding of only a part of the total number of consecutive images by use of various forms of motion estimation techniques to allow other images to be generated by prediction on the basis of encoded images, correlation between the parts of consecutive images, in which a moving object will appear, being ensured by incorporation in the encoded video signal of so-called motion vectors representing the spatial offset between a departure segment of an encoded image and an arrival segment of a succeeding predicted image.

A general disclosure of the application of motion estimation or compensation to digital video signal encoding in accordance with the MPEG standards is given e.g. in Hervé Benoit: "Digital Television MPEG-1, MPEG-2 and principles of the DVB system", London, 1997.

Another application of motion estimation or compensation is video scan rate conversion, where the output image rate of a video signal processing system differs from the input image rate. Also this type of application benefits from the use of motion vectors as described by Gerard de Haan et al in "True Motion Estimation with 3-D Recursive Block Matching", IEEE Transactions on circuits and Systems for Video Technology, Vol. 3, No. 5, October 1993, and by Gerard de Haan in "IC for Motion-compensated De-interlacing, Noise Reduction and Picture-rate conversion", IEEE Transactions on Consumer Electronics, Vol. 45, No. 3, August 1999.

For such encoding or scan rate conversion methods as well as other practical applications of motion estimation or compensation the determination of motion vectors is based on a technique known as block matching, by which for a selected image segment, which may be a generally square block of pixels, typically containing 8 x 8 pixels, a search area is defined that surrounds the corresponding pixel block in the succeeding image with this pixel block positioned in its centre and typically contains e.g. 88 x 40 pixels is defined. By block matching searching is effected through the search area for a pixel block containing pixel data matching that of the selected pixel block.

In present systems the image data of this search area or window is generally stored in a local buffer or on-chip memory having a size equal to the image width, which requires a relatively large buffer memory.

When a motion vector is to be assigned to a new segment such as a pixel block of an image the content of the search area must be updated by transfer of pixel blocks surrounding the new pixel block from the image stored in a background memory. This updating of the search area is made by a pipelining technique simultaneously with the image processing to optimise the total data throughput of the system.

It is an object of the present invention to provide a significantly improved way of updating the window, whereby the image memory access can be optimized for improved efficiency. To this end, the invention provides a method and a device for data retrieval, and an apparatus as defined in the independent Claims.

Advantageous embodiments are defined in the dependent Claims.

According to a first aspect of the invention, data belonging to an image segment of an image is retrieved from an image memory by shifting a predetermined window comprising said image segment and one or more adjacent image segments over the image with a prescribed scanning direction, the width of the window being smaller than the width of the image, by using a buffer memory capable of storing the data of the current window and by shifting the position of the window over the image in a vertical scanning direction. The one or more adjacent image segments do not need to be of equal size as said image segment, although in some practical embodiments they will be of equal size.

By the vertical scanning of the search window over the image being processed, which is thereby scanned in successive vertical columns, accessing requirements to the background memory can be reduced to simple consecutive horizontal memory access, whereby hardware restraints are reduced and processing time is shortened. Although the selected and corresponding image segments are relatively big, bandwidth requirements to the on-chip memory for storing the search area are still fully acceptable.

In preferred embodiments, the defining of the search area is independent of the image width, and the buffer memory has a size independent on the image width. The image width is determined externally, e.g. 720 pixels but other values are also possible. The buffer memory width is determined by architecture considerations. A practical buffer memory width is a multiple of 8 pixels, e.g. 256 pixels. By making the search area and the buffer memory size independent of the image width, several image widths can be processed by the same architecture.

According to a particular advantageous implementation of the method, processing time may be further reduced by defining the search area to include a number of horizontal rows of pixel blocks, an update area being attached to the search area for pixel blocks in the next horizontal row in the scanning direction outside the search area.

In the following, embodiments of the invention will be explained in further detail with reference to the accompanying drawings, wherein
Fig. 1 is a simplified illustrative example of image prediction by use of motion estimation,
Fig. 2 illustrates determination of a motion vector by a prior art block-matching technique,
Fig. 3 illustrates motion vector determination with vertical search area scanning in accordance with an embodiment of the invention, and
Fig. 4 is a simplified block diagram of an estimation device according to the invention.

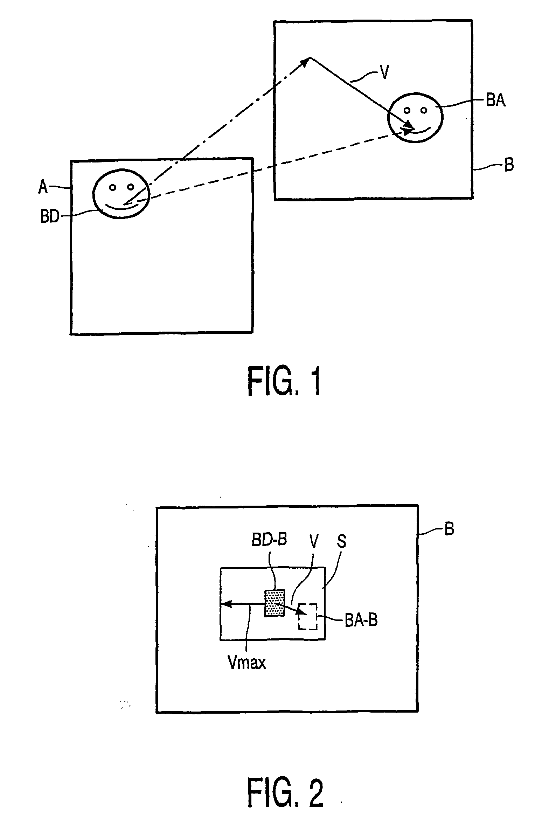

In Fig. 1 an example is given of the application of motion estimation to interpolation of an image in a sequence of consecutive images on the basis of a preceding image of the sequence. Such interpolation is typically used in video scan rate conversion, e.g. from 50 Hz into 100 Hz image format.

Each motion vector V describes the difference between the location of a departure segment BD in a first image A and an arrival zone BA in a second image B. Thus, the motion vector represents the movement of an individual object from the departure zone in the first image to the arrival zone in the second image.

Fig. 2 illustrates the determination of a motion vector V and its assignment to an image segment in the form of a block B of 8 x 8 pixels of an input video signal. The motion vector estimation is based on a so-called block matching technique as known in the art, by which selection is made of a pixel block BD-B in the image B, to which a motion vector V is to be assigned and a search area or window S to surround the actual pixel block BD-B in the image B. Typically, the search area S may comprise a number of pixel blocks surrounding the pixel block BD-B in the horizontal and vertical directions and for a block of 8 x 8 pixels the size of the search area S may be e.g. 88 x 40 pixels.

In popular terms, the motion vector V to be assigned to the actual pixel block BD-B is determined by searching the search area or window S for a pixel block BA-B matching the pixel block BD-A in the first image A.

By use of the block matching technique this searching process can be conducted with a varying level of complexity depending to some extent on the actual application of motion compensation or estimation, but involves typical selection of a best vector from a set of so-called candidate vectors stored in a prediction memory. Details of the searching process is not explained here, but comprehensive analysis of various options is given in Gerard de Haan et al: "True-motion Estimation with 3-D Recursive Search Block Matching", IEEE transactions on Circuits and Systems for Video Technology, Vol.3, No. 5, October 1993 and Gerard de Haan: "IC for Motion-compensated De-interlacing, Noise Reduction and Picture-rate conversion", IEEE Transactions on Consumer Electronics, Vol. 45, No. 3, August 1999, as mentioned hereinbefore.

In this way motion vectors may be determined for all pixel blocks of an image.

In the prior art method illustrated in Fig. 2 the content of the search area S must be updated for each assignment of a motion vector to a new image segment such as a pixel block and, since the search area must include a number of pixel blocks surrounding the selected pixel block both in vertical and horizontal directions. Such update for a pixel block causes heavy bandwidth demands to transfer image data to the search area buffer. For this reason, prior art systems typically use a local buffer containing the full width of the image. This does resolve the bandwidth issue, but has the clear disadvantage that the implementation poses a limitation on image size and furthermore the buffer must be relatively large.

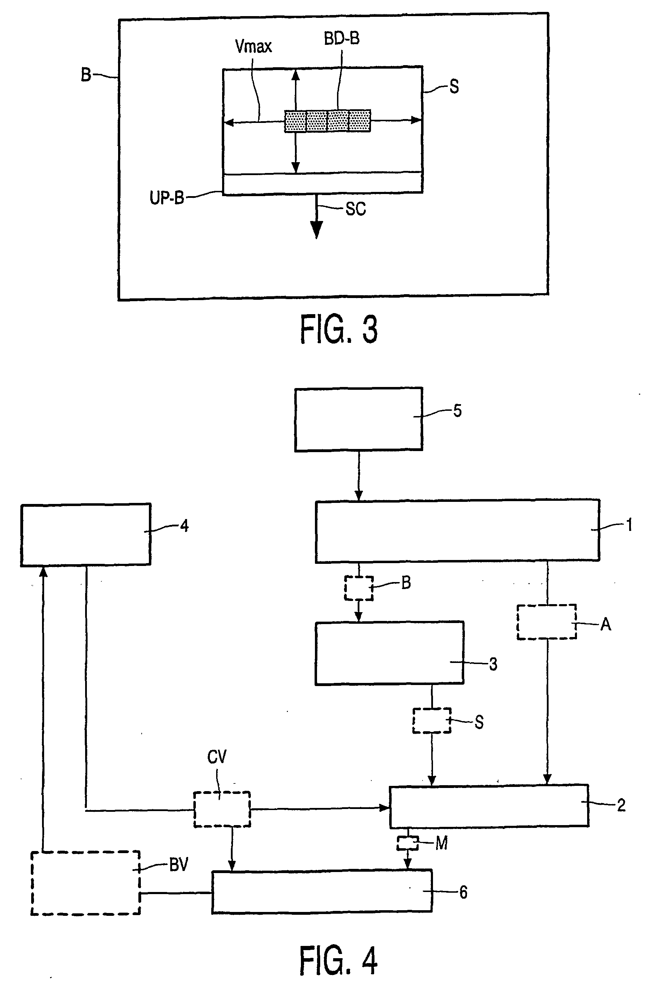

As illustrated in Fig. 3, a selected image segment of an image is defined, according to the method of the invention, to include a number of consecutive pixel blocks positioned in a single horizontal row of the image. Moreover the search area S to surround the image segment BD-B is defined to have an extension in the horizontal direction such that the search area S includes in horizontal direction a second number of pixel blocks, which is higher than the number of blocks in the single row in the actual image segment BDP, which by itself may be positioned in the centre part of the search area S.

Combined with the feature that block matching and motion vector assignment to segments distributed vertically in the image are conducted by shifting the position of the search area S over the image from segment to another with a vertical scanning direction SC, the updating of the search area is significantly facilitated, since accessing requirements to the image memory can be reduced to simple horizontal memory access. Thereby, hardware restraints can be reduced and processing time is shortened.

Although the present invention requires more bandwidth to the local search than state of the art systems, it has turned out to be possible within fully acceptable bandwidth requirements, to equip the search area to process, as an example, 16 standard pixel blocks of 8 x 8 pixels each in the single horizontal row, i.e. of a horizontal length of 128 bytes, with a horizontal extension of 64 bytes on both sides to allow data access via motion vectors resulting in a width of 256 bytes corresponding to 32 standard pixel blocks. Updating of such a search area requires memory accesses of 256 consecutive memory addresses, which can be implemented very efficiently using state of the art memory systems. In this particular example, there is a bandwidth overhead of a factor of 2, since 256 bytes need to be loaded into the buffer to process 128 bytes of pixel data. In many systems, such bandwidth penalty is fully acceptable, but other trade-offs between the size of the buffer and the bandwidth are possible. In this particular example, the buffer has a width of only 256 bytes, which is a significant reduction compared to the full image width of 720 bytes as used in state of the art systems for processing standard video signals.

As illustrated in Fig. 3 the search area S may include a number of horizontal rows of pixel blocks, i.e. 5 rows corresponding to a vertical height of 40 bytes. In this connection, a further advantageous reduction of processing time can be obtained, if an update area UP-B is attached to the search area. When the shifting of the search area S over the image in the vertical scanning direction SC is effected with shifting of the actual segment from one row to the next, the availability of the update area UPD will allow transfer of pixel blocks for this next row to the update area, while block matching and motion vector determination for the current segment is in progress.

In the simplified block diagram in Fig. 4 of a possible motion estimator architecture for use e.g. in video scan rate conversion the motion estimation is performed on a pair of images A and B, stored in an image memory 1, from which image A comprising groups of image segments for which motion vectors are to be determined, is transferred to a block matcher 2. In the block matcher 2 a search for image segment groups or blocks in the image B matching predetermined image blocks in image A is conducted by application of a search window S transferred to the block-matcher 2 from a local buffer or search area memory 3 and by use of a set of candidate motion vectors CV transferred to the block matcher 2 from a vector memory 4.

The search area S temporarily stored in the buffer memory 3 contains a subset of the data of image B.

The vector memory 4 stores all motion vectors determined for segment groups or blocks of the preceding image and, for an image block to be searched in image A the set of candidate vectors may typically comprise motion vectors determined for an image block with same location in the preceding image or an adjacent image block in the current image.

The search area or window S is made up by transfer of the number of pixel blocks defined to surround the actual pixel block BD-B from the image memory 1 to the local buffer memory 3, in which the search area is kept stored for the duration of the searching and block matching process. Since, according to the invention the actual image segment is composed of pixel blocks positioned in the same horizontal row in the image, the transfer of pixel blocks for the search area S can be effected by simple horizontal line access to the memory 1 by selection means 5.

The block matching process conducted in block matcher 2 is known in the art and involves comparison or matching of blocks localized by application of the candidate vectors CV. Through this process a match M is found for each candidate vector. The best match is selected in a vector selector 6 and the corresponding best vector BV is stored in the vector memory 4 for use in the determination of future motion vectors.

Concurrently with the progress of block matching for an actual image segment, preparation is made for processing of the next segment by transfer of the corresponding pixel blocks from the image memory 1 to the search area memory 3 for inclusion in the update area UP-B.

For a person skilled in the art, it will be clear that a complete motion estimation device further comprises means to load image data into the image memory 1 and means to read vectors from vector memory 4 to be used in further processing.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word 'comprising' does not exclude the presence of other elements or steps than those listed in a claim. The invention can be implemented by means of hardware comprising several distinct elements, and by means of a suitably programmed computer. In a device claim enumerating several means, several of these means can be embodied by one and the same item of hardware. The mere fact that certain measures are recited in mutually different dependent claims does not indicate that a combination of these measures cannot be used to advantage.

In summary, for data retrieval from an image memory, in particular for compensation and/or estimation of motion in a digital video image, a window (S) is defined for an actual image segment (BD-B), the window including the actual image segment and one or more adjacent image segments. The window width is smaller than the image width. When progressing over the image the window (S) is shifted from one segment to the next with a vertical scanning direction (SC).

An update area (UP-B) may be attached to the window (S) to prepare for processing of the next image segment concurrently with processing of the current segment.

## Claims

1. A method for data retrieval, by which data belonging to an image segment (BD-B) of an image is retrieved from an image memory (1) by shifting a predetermined window (S) comprising said image segment and one or more adjacent image segments over the image in a prescribed scanning direction, the width of the window being smaller than the width of the image, said method comprising the steps of:
using a buffer memory (3) capable of storing the data of the current window (S) and
shifting the position of the window (S) over the image (B) in a vertical scanning direction (SC).

2. A method as claimed in Claim 1, wherein the size of the window is independent of the image size, and wherein the buffer memory has a size independent of the image width.

3. A method as claimed in claim 1, wherein, in the vertical scanning direction, an update area (UP-B) is attached to the current window, the update area (UP-B) comprising pixels of a next horizontal row.

4. A method as claimed in Claim 1, wherein the entire image (B) is scanned column by column in the vertical direction.

5. A method as claimed in Claim 1, wherein said image segment consists of 16 pixel blocks, e.g. of 8 x 8 pixels each, and said window consists of 32 pixel blocks, e.g. of 8x8 pixels each.

6. A method as claimed in Claim 1, **characterized by** its use for filtering in noise reduction in a digital video signal.

7. A method as claimed in Claim 1, **characterized by** its use for interpolation for video format conversion.

8. A method as claimed in Claim 1, **characterized by** its use for de-interlacing of an interlaced video signal.

9. A device for data retrieval, by which data belonging to an image segment (BD-B) of an image is retrieved from an image memory (1) by shifting a predetermined window (S) comprising said image segment and one or more adjacent image segments over the image with a prescribed scanning direction, the width of the window being smaller than the width of the image, said device comprising:
a buffer memory (3) capable of storing the data of the current window (S) and
means for shifting the position of the window (S) over the image (B) in a vertical scanning direction (SC).

10. A device as claimed in Claim 9, wherein the storage capacity of said buffer memory (3) is defined to include the current window and an update area (UP-B) comprising pixels of a next horizontal row in the vertical scanning direction.

11. A device as claimed in Claim 10, wherein the device further comprises means for transferring pixel data of said image to said update area (UP-B) from said image memory (1) during processing of data of the current window (S).

12. An apparatus for coding or reproducing video, the apparatus comprising:
an input unit for obtaining a video image, and
a device according to Claim 9 for data retrieval, by which data belonging to an image segment (BD-B) of an image are retrieved from an image memory (1).

## Patentansprüche

1. Verfahren zum Datenabruf, wodurch Daten, die zu einem Bildsegment (BD-B) eines Bildes gehören, **dadurch** aus einem Bildspeicher (1) abgerufen werden, dass ein vorbestimmtes Fenster (S) mit dem genannten Bildsegment und ein oder mehrere angrenzende Bildsegmente in einer vorgeschriebenen Abtastrichtung über das Bild verschoben werden, wobei die Breite des Fensters kleiner ist als die Breite des Bildes, wobei das genannte Verfahren die nachfolgenden Verfahrensschritte umfasst:
- das Verwenden eines Pufferspeichers (3)der imstande ist, die Daten des aktuellen Fensters (S) zu speichern, und
- das Verschieben der Lage des Fensters (S) über das Bild in einer vertikalen Abtastrichtung (SC).

2. Verfahren nach Anspruch 1, wobei die Größe des Fensters unabhängig ist von der Bildgröße, und wobei der Pufferspeicher eine Größe hat, die unabhängig ist von der Bildbreite.

3. erfahren nach Anspruch 1, wobei in der vertikalen Abtastrichtung ein Aktualisierungsgebiet (UP-B) an das aktuelle Fenster angehängt wird, wobei das Aktualisierungsgebiet (UP-B) Pixel einer nächsten horizontalen Reihe enthält.

4. Verfahren nach Anspruch 1, wobei das ganze Bild (B) spaltenweise in der vertikalen Richtung abgetastet wird.

5. Verfahren nach Anspruch 1, wobei das genannte Bildsegment aus 16 Pixelblöcken, beispielsweise aus je 8 x 8 Pixeln, besteht und wobei das genannte Fenster aus 32 Pixelblöcken, beispielsweise aus je 8 x 8 Pixeln, besteht.

6. Verfahren nach Anspruch 1, **gekennzeichnet durch** Anwendung desselben zur Filterung zur Rauschreduktion in einem digitalen Videosignal.

7. Verfahren nach Anspruch 1, **gekennzeichnet durch** Anwendung desselben zur Interpolation zur Videoformatumwandlung.

8. Verfahren nach Anspruch 1, **gekennzeichnet durch** Anwendung desselben zur Entschachtelung eines verschachtelten Videosignals.

9. Anordnung zum Datenabruf, wodurch Daten, die zu einem Bildsegment (BD-B) eines Bildes gehören, aus einem Bildspeicher (1) **dadurch** abgerufen werden, dass ein vorbestimmtes Fenster (S) mit dem genannten Bildsegment und ein oder mehrere angrenzende Bildsegmente in einer vorgeschriebenen Abtastrichtung über das Bild verschoben werden, wobei die Breite des Fensters kleiner ist als die Breite des Bildes, wobei die Anordnung die nachfolgenden Elemente umfasst:
- einen Pufferspeicher (3), der imstande ist, die Daten des aktuellen Fensters (S) zu speichern und
- Mittel zum Verschieben der Lage des Fensters (S) über das Bild (B) in einer vertikalen Abtastrichtung (Synchronisation).

10. Anordnung nach Anspruch 9, wobei die Speicherkapazität des genannten Pufferspeichers (3) derart definiert ist, dass sie das aktuelle Fenster und ein Aktualisierungsgebiet (UP-B) umfasst, das Pixel einer nächsten horizontalen Reihe in der vertikalen Abtastrichtung enthält.

11. Anordnung nach Anspruch 10, wobei die Anordnung weiterhin Mittel aufweist zum Übertragen von Pixeldaten des genannten Bildes zu dem genannten Aktualisierungsgebiet (UP-B) zu dem genannten Aktualisierungsgebiet (UP-B) von dem genannten Bildspeicher (1) während der Verarbeitung von Daten des aktuellen Fensters (S).

12. Anordnung zum Codieren oder Wiedergeben von Video, wobei diese Anordnung Folgendes umfasst:
- eine Eingangseinheit zum Erhalten eines Videobildes, und
- eine Anordnung nach Anspruch 9 zum Datenabruf, wodurch Daten, die zu einem Bildsegment (BD-B) eines Bildes gehören, aus einem Bildspeicher (1) abgerufen werden.

## Revendications

1. Procédé pour l'extraction de données, par lequel des données appartenant à un segment d'image (BD-B) d'une image sont extraites d'une mémoire d'image (1) en déplaçant une fenêtre prédéterminée (S) comprenant ledit segment d'image et un ou plusieurs segments d'image adjacents, sur l'image dans une direction de balayage prescrite, la largeur de la fenêtre étant inférieure à la largeur de l'image, ledit procédé comprenant les étapes suivantes:
utiliser une mémoire tampon (3) capable de stocker les données de la fenêtre (S) courante et
déplacer la position de la fenêtre (S) sur l'image (B) dans une direction de balayage verticale (SC).

2. Procédé suivant la revendication 1, dans lequel la taille de la fenêtre est indépendante de la taille de l'image, et dans lequel la mémoire tampon a une taille indépendante de la largeur de l'image.

3. Procédé suivant la revendication 1, dans lequel, dans la direction de balayage verticale, une zone de mise à jour (UP-B) est attachée à la fenêtre courante, la zone de mise à jour (UP-B) comprenant des pixels d'une rangée horizontale suivante.

4. Procédé suivant la revendication 1, dans lequel toute l'image (B) est balayée colonne par colonne dans la direction verticale.

5. Procédé suivant la revendication 1, dans lequel ledit segment d'image est constitué de 16 blocs de pixels, par exemple de 8 x 8 pixels chacun, et ladite fenêtre est constituée de 32 blocs de pixels, par exemple de 8 x 8 pixels chacun.

6. Procédé suivant la revendication 1, **caractérisé en ce qu'**il est utilisé pour le filtrage dans la réduction du bruit dans un signal vidéo numérique.

7. Procédé suivant la revendication 1, **caractérisé en ce qu'**il est utilisé pour l'interpolation pour la conversion de format vidéo.

8. Procédé suivant la revendication 1, **caractérisé en ce qu'**il est utilisé pour le désentrelacement d'un signal vidéo entrelacé.

9. Dispositif pour l'extraction de données par lequel des données appartenant à un segment d'image (BD-B) d'une image sont extraites d'une mémoire d'image (1) en déplaçant une fenêtre (S) prédéterminée comprenant ledit segment d'image et un ou plusieurs segments d'image adjacents sur l'image avec une direction de balayage prescrite, la largeur de la fenêtre étant inférieure à la largeur de l'image, ledit dispositif comprenant:
une mémoire tampon (3) capable de stocker les données de la fenêtre (S) courante et
un moyen pour déplacer la position de la femêtre (S) sur l'image (B) dans une direction de balayage verticale (SC).

10. Dispositif suivant la revendication 9, dans lequel la capacité de stockage de ladite mémoire tampon (3) est définie de manière à comprendre la fenêtre courante et une zone de mise à jour (UP-B) comprenant des pixels d'une rangée horizontale suivante dans la direction de balayage verticale.

11. Dispositif suivant la revendication 10, dans lequel le dispositif comprend en outre un moyen pour transférer des données de pixels de ladite image à ladite zone de mise à jour (UP-B) à partir de ladite mémoire d'image (1) pendant le traitement des données de la mémoire (S) courante.

12. Appareil pour le codage ou la reproduction de vidéo, l'appareil comprenant:
une entrée pour obtenir une image vidéo, et
un dispositif suivant la revendication 9 pour l'extraction de données, par lequel des données appartenant à un segment d'image (BD-B) d'une image sont extraites d'une mémoire d'image (1).
